# EUROPÄISCHE PATENTANMELDUNG

(11) **EP 1 238 746 A2**
(43) Veröffentlichungstag der Anmeldung: **11.09.2002**
(21) Anmeldenummer: 02004920.1
(22) Anmeldetag: 05.03.2002
(51) Int. Cl.: B23K 26/10, B23K 26/38

(54) **Verfahren und Vorrichtung robotgesteuerten Schneiden und Schweissen mit Laserstrahlung**

(30) Priorität: 09.03.2001 DE 10111662
(71) Anmelder: Thyssen Krupp Stahl AG, 40211 Düsseldorf (DE)
(72) Erfinder: Brockamp, Peter, 52064 Aachen (DE); Neumann, Günter, 52066 Aachen (DE)
(74) Vertreter: Draudt, Axel Hermann Christian, Dipl.-Ing.

(57) **Zusammenfassung**

Verfahren zum robotergesteuerten Schneiden und Schweißen von Werkstücken (1,2) mit Laserstrahlung (3), insbesondere zum Herstellen von Tailored Blanks, bei dem ein Bearbeitungskopf (4) die Laserstrahlung (3) einer vorgegebenen Kontur (9) entsprechend bei einem ersten Schneiden auf ein erstes Werkstück (1) fokussiert, bei dem danach der Bearbeitungskopf (4) die Laserstrahlung (3) derselben vorgegebenen Kontur (9) entsprechend bei einem zweiten Schneiden auf ein zweites Werkstück (2) fokussiert, und bei dem die beiden Werkstücke (1,2) mit ihren geschnittenen Konturen (10₁,10₂) zusammengebaut und miteinander mit Laserstrahlung verschweißt werden, dadurch gekennzeichnet, daß Abweichungen einer geschnittenen Kontur (10₁,10₂) von der vorgegebenen Kontur (9) in y-Richtung während des Schneidens mit einem Sensor (7,8', 43) ermittelt werden, und daß während eines Schneidens eine Korrektur im Sinne eines Konstanthaltens eines y-Abstandes des Fokuspunktes (TCP) der Laserstrahlung (3) zu der vorgegebenen Kontur (9) erfolgt, indem ein die Lage des Fokuspunkts (TCP) beeinflussendes optisches Bauelement (11) des Bearbeitungskopfes (4) entsprechend angesteuert wird.

## Beschreibung

Die Erfindung bezieht sich auf ein Verfahren zum robotergesteuerten Schneiden und Schweißen von Werkstücken mit Laserstrahlung mit den Merkmalen des Oberbegriffs des Anspruchs 1.

Ein solches Verfahren ist allgemein bekannt. Es wird üblicherweise mit Knickarmrobotern durchgeführt, die aufgrund ihrer geringen Einstellfrequenz aller Achsen von ca. 10 Hz erhebliche Ungenauigkeiten beim Schneiden und Schweißen aufweisen. Hinzu kommen ihre Ungenauigkeiten aufgrund der mechanischen Herstellung der Roboterbauteile, der eingesetzten Encoder sowie infolge ihres maschineninternen Koordinatensystems, das von einem idealen Koordinatensystem abweicht. Hinzu kommen auch dynamisch bedingte Ungenauigkeiten der Fokuspunktlage bei ca. 5 bis 25 m/min, je nach Getriebeausführung und Enge der Teachpunkte. Es wird nur eine Bahnwiederholgenauigkeit von ca. ± 0,1 bis 0,4 mm in jeder der Koordinatenrichtungen erreicht. Als Genauigkeitsbereich ergibt sich ± 1 mal Blechdicke. Nötig wäre es aber, das Schneiden von Blechen mit Hilfe eines Roboters auf eine Genauigkeit von ± 0,025 mal Blechdicke zu bringen, um beim Schweißen ohne Schweißzusatz einen Nahteinfall zu vermeiden. Außerdem sind Radien von unter 50 mm mit dem bekannten Verfahren nicht zu schweißen, weil die Roboter-Steuerungskorrektur zu langsam ist.

Darüber hinaus ist es bekannt, einen Laserstrahl mit Hilfe eines oder mehrerer bewegter Spiegel an einer Roboterhand so zu steuern, daß diese Roboterhand während der Bearbeitung in einer vorbestimmten Position gehalten wird. Der Fokus ist dann im Vergleich zur Robotersteuerung mit erhöhter Genauigkeit auf dem Werkstück zu positionieren. Die dabei erreichbaren Bearbeitungsweiten von ca. 50 mm sind jedoch insbesondere zur Herstellung von Tailored Blanks völlig unzureichend.

Der Erfindung liegt die Aufgabe zugrunde, ein Verfahren mit den eingangs genannten Verfahrensschritten zu schaffen, das es erlaubt, mit einem einzigen Roboter die Blechkanten im Bereich von ± 0,025 mal Blechdicke als Bahnwiederholgenauigkeit zu schneiden und anschließend zu verschweißen. Die Kontur soll dabei auch sehr kleine Radien von weniger als 50 mm bis hin zu scharfkantigen Ecken aufweisen können.

Die vorgenannte Aufgabe wird durch die Merkmale des Kennzeichenteils des Anspruchs 1 gelöst.

Für die Erfindung ist von Bedeutung, daß bereits während eines Schneidens ein Sensor herangezogen wird, um in y-Richtung vorhandene Abweichungen einer geschnittenen Kontur von der vorgegebenen Kontur zu ermitteln. Mit dem bereits während eines Schneidens erfolgenden Erfassen solcher Abweichungen ist es möglich Schneid- und Schweißverfahren durchzuführen, die eine erhöhte Bahnwiederholgenauigkeit aufweisen. Die oben genannten, an sich zu Ungenauigkeiten führenden Umstände des Roboters werden bereits während des Schneidens vermieden oder kommen nicht zur Auswirkung. Dabei kommt insbesondere zur Anwendung, daß ein optisches Bauelement des Bearbeitungskopfes während eines Schneidens zur Durchführung einer Korrektur im Sinne eines Konstanthaltens eines Fokuspunktes in y-Richtung herangezogen wird. Dieses optische Bauelement arbeitet schnell und genau. Infolgedessen ergeben sich insbesondere für gleiche Bahngeschwindigkeiten in x-Richtung beim Schneiden beider Werkstücke stets praktisch identische Konturen an diesen beiden miteinander durch Schweißen zu verbindenden Werkstücken. Es ist auch nicht erforderlich, Kosten für Schneidwerkzeuge, Pressen oder Fräsarbeiten aufzuwenden, um Bleche oder Blechstapel genauzubearbeiten, was das nahteinfallose Schweißen ebenfalls begünstigen würde. Vielmehr können flexibel einsetzbare Maschinen bzw. Roboter auch Tailored Blanks oder Tailored Tubes in Kleinserie wirtschaftlich fertigen.

Das vorbeschriebene Verfahren kann so durchgeführt werden, daß das Ermitteln von Abweichungen am ersten Werkstück oder an einer Schablone während des ersten Schneidens erfolgt, und daß die Korrektur ebenfalls während dieses ersten Schneidens erfolgt. Infolgedessen wird das erste Werkstück mit hoher Genauigkeit geschnitten. Abweichungen von der gewünschten Kontur sind gering. Die geschnittene Kontur des ersten Werkstücks stimmt mit einer vorgegebenen virtuellen oder rechnerischen Kontur im Rahmen der Regelungsgenauigkeit überein.

Bevorzugtermaßen kann so verfahren werden, daß das Schneiden des zweiten Werkstücks unter Berücksichtigung der beim ersten Schneiden erfolgten Korrektur durchgeführt wird. Korrekturen beim ersten Schneiden des Werkstücks werden somit dahingehend ausgenutzt, daß sie nicht zu Ungenauigkeiten des zweiten Werkstücks führen können. Infolgedessen können die Konturen des ersten Werkstücks und des zweiten Werkstücks so angeordnet werden, daß in y-Richtung gleiche bzw. im Sinne der Bahnwiederholgenauigkeit gleiche Abstände aller Konturpunkte voneinander gegeben sind.

Das zur Lösung der Aufgabe oben angegebene Verfahren kann aber auch so durchgeführt werden, daß das Ermitteln von Abweichungen am ersten Werkstück während des zweiten Schneidens erfolgt, und daß während dieses zweiten Schneidens eine Korrektur unter Berücksichtigung der beim Schneiden des ersten Werkstücks aufgetretenen Abweichungen erfolgt. Während des Schneidens des ersten Werkstücks brauchen dabei nicht unbedingt Korrekturen in y-Richtung durchgeführt zu werden. Der Schnitt am ersten Werkstück kann sich in einem oben als nicht ausreichend bezeichneten Genauigkeitsbereich bewegen. Während des zweiten Schneidens werden jedoch mit Hilfe des ersten Werkstücks Abweichungen ermittelt, nämlich Abweichungen der Kontur des ersten Werkstücks von einer vorgegebenen virtuellen Kontur. Diesen Abweichungen entsprechend wird dann beim zweiten Schneiden geschnitten, so daß also das zweite Werkstück genauso konturiert ist, wie das erste Werkstück.

Die vorstehend beschriebenen Verfahren können zweckmäßigerweise so durchgeführt werden, daß die Korrektur beim Schneiden unter Berücksichtigung der Schnittfugenbreite als Funktion des Schnittwinkels zur y-Richtung erfolgt. Durch Berücksichtigung der Schnittfugenbreite als weiteren Parameter beim Schneiden läßt sich die Bahngenauigkeit weiter steigern, so daß trotz der durchgeführten Korrekturen vorhandene Abweichungen der Werkstücke in y-Richtung ausgeglichen werden können.

Es kann des weiteren auch von Vorteil sein, das Verfahren so durchzuführen, daß die Korrektur beim Schneiden unter Berücksichtigung der jeweils erforderlichen z-Lage des Werkstücks erfolgt. Das gilt insbesondere dann, wenn die Werkstücke mit einer Fase geschnitten werden.

Es ist zu bevorzugen, das Verfahren so durchzuführen, daß die Ermittlung der Abweichungen und/oder die Korrekturen mit einer Frequenz von mindestens 200 Hz durchgeführt werden. Damit bewegt sich die Frequenz der Korrekturen um mehr als eine Zehnerpotenz oberhalb der Einstellfrequenz aller Achsen eines Knickarmroboters, so daß die erforderlichen Korrekturen sehr genau durchgeführt werden können.

Des weiteren ist es vorteilhaft, das Verfahren so durchzuführen, daß die beiden geschnittenen Werkstücke auf einer die Korrekturen berücksichtigenden Bahn miteinander verschweißt werden. Es findet also nicht nur ein Verschweißen beider Werkstücke gegebenenfalls unter Einsatz eines üblichen Nahtfolgesensors statt, sondern es werden auch alle Korrekturen der miteinander zu verschweißenden Konturen berücksichtigt, nämlich wiederum durch Einsatz des optischen Bauelements des Bearbeitungskopfes, das entsprechend den Korrekturen angesteuert wird.

Die Erfindung bezieht sich auch auf eine Vorrichtung mit den Merkmalen des Oberbegriffs des Anspruchs 9. Um bei einer solchen Vorrichtung die oben beschriebenen Genauigkeitsprobleme zu lösen, kann die Vorrichtung mit den Merkmalen des Kennzeichenteils des Anspruchs 9 ausgebildet werden. Mit diesen Merkmalen können die oben zu den Verfahren beschriebenen Vorteile erreicht werden, insbesondere die dort angesprochene Bahnwiederholgenauigkeit ist möglich. Die vorgegebene Kontur kann dabei entweder eine virtuelle Kontur sein, in Bezug auf die ein Abstand des Fokuspunkts erreicht werden soll, oder es wird eine sonstwie vorgegebene Kontur eines ersten Werkstücks oder einer Schablone während des Schneidens des zweiten Werkstücks am ersten Werkstück abgetastet und eine dementsprechende Steuerung durchgeführt.

Es gibt unterschiedliche vorteilhafte Ausführungsformen einer vorbeschriebenen Vorrichtung, um während eines Schneidens die geschnittene Kontur zu erfassen, und die erste Ausführungsform ist dadurch gekennzeichnet, daß als Sensor ein Reflektor am Bearbeitungskopf oder an einer Roboterhand eines Knickarmroboters angebracht ist, dessen Reflektorbahn mit einem Lasertracker verfolgt werden kann, der an die Auswertungseinheit angeschlossen ist. Der Lasertracker liefert Bahnsignale des Bearbeitungskopfs an die Auswertungseinheit, so daß die effektive Bahn des Bearbeitungskopfs insbesondere auch hinsichtlich der y-Richtung erfaßt werden kann. Damit steht der Auswertungseinheit ein Meßsignal zur Verfügung, um rechnergestützte Steuersignale für den Roboter bzw. für dessen optisches Bauelement des Bearbeitungskopfes zu errechnen.

Eine zweite Ausführungsform ist dadurch gekennzeichnet, daß als Sensor ein Scanner am Bearbeitungskopf oder an eine Roboterhand eines Knickarmroboters angeschlossen ist, und daß der Scanner an die Auswertungseinheit angeschlossen ist. Der Scanner erfaßt die Kontur einer Schablone oder die tatsächlich hergestellte Kontur des ersten geschnittenen Werkstücks und liefert entsprechende Signale an die Auswertungseinheit, die Steuersignale für das optische Bauelement des Bearbeitungskopfs errechnen kann. Eine solche Ausführungsform ist insbesondere dann vorteilhaft, wenn eine geschnittene Kontur feststeht, nämlich dann, wenn ein zweites Werkstück in Anpassung an ein erstes, zuvor geschnittenes Werkstück hergestellt werden soll.

Zweckmäßigerweise wird die Vorrichtung so ausgebildet, daß als optisches Bauelement ein maximal um ± 1,2° in y-Richtung schwenkbarer Spiegel vorhanden ist. Derartige Spiegel können massearm ausgebildet werden. Ihre Auslenkung ist nicht zu groß, um die gewünschten Frequenzen zu erreichen.

Die Vorrichtung genügt insbesondere dann den an eine ausreichende Bahnwiederholgenauigkeit zu stellenden Anforderungen, wenn der Spiegel in y-Richtung mit 10 bis 30 µm-Schritten ohne ein Überschwingen um mehr als 40 % der Schrittweite mit mindestens 200 Hz einstellbar ist.

Desweiteren ist es vorteilhaft, wenn die Projektion der Längsachse des Bearbeitungskopfes auf x-z-Ebene senkrecht zu einer Tangente der Werkstückoberfläche steht und daß die Längsachse bedarfsweise einen Winkel mit der x-z-Ebene bildet. Es werden dann Fehler vermieden, die sich sonst aus unterschiedlicher z-Lage der Werkstücke oder von Werkstückabschnitten ergeben könnten. Das gilt insbesondere für eine schräge Einstellung des Bearbeitungskopfes, bei der die Längsachse einen Winkel mit der x-z-Ebene bildet.

Wenn der Bearbeitungskkopf eine in y-Richtung ausrichtbare Langloch-Schneiddüse aufweist, ist dafür gesorgt, daß die Laserstrahlung in y-Richtung verschwenkt werden kann, ohne dabei unerwünschterweise an Düsenwände zu gelangen. Es wird eine ungestörte Strahlabgabe erreicht.

Die Vorrichtung kann so ausgebildet werden, daß der Bearbeitungskopf eine mit einer Schneidlinse versehene, aus dem Strahlengang der Laserstrahlung entfernbare Schneiddüse aufweist. Damit kann ein schnelles Umrüsten von Schneidbetrieb auf Schweißbetrieb und umgekehrt erreicht werden. Eine weitere Ausgestaltung der Vorrichtung kann sich dadurch auszeichnen, daß der Beärbeitungskopf eine in der Richtung des Strahlengangs der Laserstrahlung in Abhängigkeit von einem in z-Richtung messenden Lasertracker verschiebliche Fokussierlinse aufweist. Eine lineare Verschiebung der Fokussierline kann dazu ausgenutzt werden, die Schnittfugenbreite konstant zu halten.

Die Vorrichtung kann aber auch so ausgebildet werden, daß zur Einstellung einer längs der Kontur gleichbreiten Schnittfuge eine kapazitive Abstandregelung der z-Lage des Fokuspunktes vorhanden ist.

Die Vorrichtung kann dahingehend ausgestaltet werden, daß eine Kontur von einer Schablone und/oder von einer geschnittenen Kante eines geschnittenen Werkstücks vorgegeben und mit einem Konturfolgesensor abtastbar ist. Die Anwendung einer Schablone empfiehlt sich insbesondere dann, wenn die zu berücksichtende Kontur extreme Richtungsänderungen aufweist.

Um die Genauigkeit einer Sensormessung zu erhöhen kann die Vorrichtung so ausgebildet werden, daß eine abstastbare Kontur mit einem Sensorlicht eines Konturfolgesensors in alle Richtungen streuenden Partikelanstrich versehen ist.

Die Vorrichtung muß so ausgebildet werden, daß das Schneiden und das nachfolgende Schweißen insgesamt wenig zeitaufwendig sind. Hierzu wird die Vorrichtung so ausgestaltet, daß je ein Werkstück mit einer Aufspanneinrichtung fixiert und bezüglich der zu schneidenden Konturen überstehend und auf demselben Niveau fixiert ist, auf dem die Aufspanneinrichtungen relativ zueinander verstellbar sind. Die Vorrichtung erlaubt es, beide Werkstücke während des Schneidens fixiert zu halten, so daß die geschnittenen Konturen relativ zueinander ausgerichtet bleiben. Schneidreste fallen neben den Aufspaneinrichtungen durch die Schwerkrafteinwirkung nach unten. Die relative Verstellbarkeit der Aufspanneinrichtungen bewirkt, daß die geschnittenen Konturen zum Schweißen einander angenähert bzw. aneinander anliegend zusammengeschoben werden können.

Bei der vorbeschriebenen Ausbildung der Vorrichtung ist es insbesondere vorteilhaft, wenn die Aufspanneinrichtungen relativ zueinander in der x-y-Ebene ihres Niveaus-schwenkverstellbar sind. Werden die Werkstücke mit ihren Konturen ineinandergreifend zusammengefahren, so bewirkt die Schwenkverstellbarkeit in der x-y-Ebene eine automatische Ausrichtung der beiden miteinander zu verbindenden Werkstücke durch formschließendes Ineinanderrücken.

Die Erfindung wird anhand von in der Zeichnung dargestellten Ausführungsbeispielen erläutert. Es zeigt:
- Fig.1: eine schematische perspektivische Darstellung von Schneidvorgängen an zwei Werkstücken mit einem Knickarmroboter,
- Fig.2: eine schematische Schnittdarstellung optisch wirksamer Elemente eines Bearbeitungskopfs eines Knickarmroboters,
- Fig.3a: und Fig.3b Darstellungen von Schneidvorgängen mit einem Knickarmroboter an rohrförmigen Werkstücken, und
- Fig.4: eine der Fig.1 ähnliche Darstellung eines Schneidvorgangs eines Werkstücks mit spezieller Konturerfassung.

Die Figuren erläutern robotergesteuertes Schneiden von Werkstücken 1,2. Es wird ein Knickarmroboter 12 eingesetzt. Dieser hat eine Basisachse 20, die als Drehachse ausgebildet und gegebenenfalls von einer linearen Zusatzachse 21 für große Wege in x-Richtung getragen ist. Mit der Drehachse 20 ist eine Schwenkachse 22 eines Roboterarms 23 verbunden, der an seinem anderen Ende eine weitere Schwenkachse 24 für einen Dreharm 25 trägt, der eine vierte Roboterachse bildet und an seinem werkstückseitigen Ende eine Roboterhand mit einem Bearbeitungskopf 4 trägt. Die Roboterhand besitzt eine Kopfachse 5 und im Kopf eine Drehachse 6, mit der eine Schneiddüse 13 des Bearbeitungskopfs 4 um die Längsachse Z verdreht werden kann.

Der Bearbeitungskopf 4 enthält eine Optik, mit der Laserstrahlung abgegeben werden kann. Die Laserstrahlung wird mit einer Glasfaserleitung 26 zugeleitet, beispielsweise mit einer Lichtleitfaser. Die Glasfaserleitung nimmt Laserstrahlung auf, die ein diodengepumpter Festkörperlaser in einer zum Schneiden geeigneten Strahlqualität bei einem Abbildungsverhältnis von 1:2 liefert und von der Leitung bei einem Faserdurchmesser von 0,4 mm aufgenommen wird. Die Faserankopplung findet im Bereich der dritten Achse 24 in die Drehachse 25 statt. Diese Achse und die von ihr getragene Roboterhand mit dem Bearbeitungskopf 4 können entsprechend der EP-A-0 901 875 ausgebildet sein, in der auch die Faserankopplung im Detail angegeben ist.

Die aus der Glasfaserleitung 26 herrührende Laserstrahlung 3 gelangt über eine Vorkollimatorlinse 27 zu zwei 90° Spiegeln 28,29 und dann zu einer Kollimatorlinse 30, die den Strahl verjüngt. Der verjüngte Strahl gelangt zu einer Aufweitungslinse 31 und von dort zu einem optischen Bauelement 11 in Gestalt eines Planspiegels, der um ± 0,5° schwenkbar ist. Von dem Bauelement 11 gelangt die Strahlung zu einer Fokussierlinse 15, die in nicht dargestellter Weise in der Richtung des Strahlengangs der Laserstrahlung 3 verschieblich ist. Damit kann für eine Verlagerung des Fokuspunktes TCP in z-Richtung gesorgt werden. Von der Fokussierlinse 15 gelangt die Laserstrahlung 3 auf einen 90° Umlenkspiegel 32, der die fokussierte Laserstrahlung durch ein Schutzglas 33 und quer zu einem Druckluft-Crossjet in eine Schneiddüse 13. Die Schneiddüse 13 ist eine Überschalldüse in Form einer Laval-Langlochdüse, die mit Hilfe der Drehachse 6 vor dem Umlenkspiegel 32 in y-Richtung gesteuert werden kann. Infolgedessen kann erreicht werden, daß ein Schwenken des Bauelements 11 dazu führt, daß die Laserstrahlung 3 durch das Langloch der Düse 13 ungehindert aus der Düse austreten kann. Innerhalb der Düse 13 dient die Schneidlinse 14 einer Nachfokussierung der Laserstrahlung nur im Fall des Schneidens. In diesem Fall liegt der Fokuspunkt TCP in der Stellung 36, beispielsweise 100 mm vom Zentrum des Umlenkspiegels 32 entfernt.

Die Düse 13 dient nur dem Schneiden und ist daher mit einem Scharnier 35 am Bearbeitungskopf befestigt, so daß sie zusammen mit ihrer Schneidlinse 14 weggeklappt werden kann, um zu schweißen. Die Düse 13 kann auch abnehmbar sein. In diesen Fällen entfällt die Nachfokussierung durch die Schneidlinse 13 und der Fokuspunkt TCP liegt in der Stellung 37, beispielsweise 130 mm vom Zentrum des Spiegels 32 entfernt.

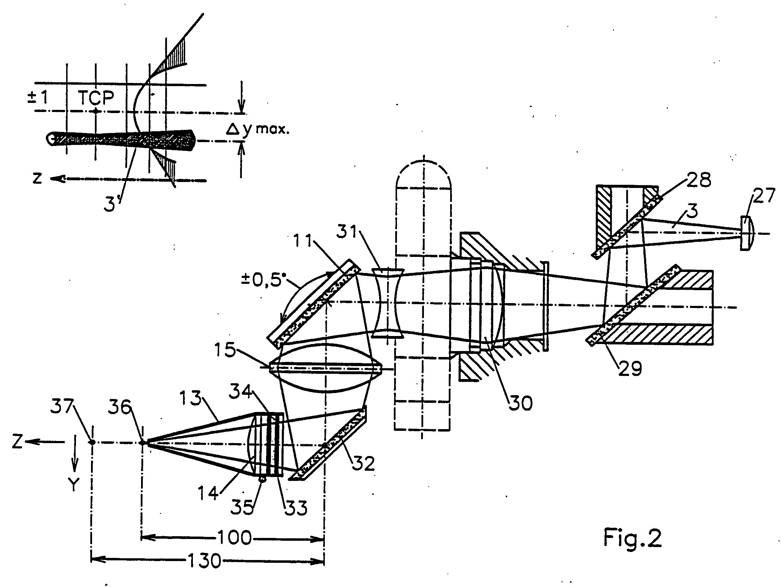

In Fig.2 ist links oben der Regelbereich für das Schneiden schematisch dargestellt. Die gewünschte Fokuslage TCP kann in z-Richtung und in y-Richtung geändert werden. In z-Richtung sind Verschiebungen von ± 1 mm zum Beispiel durch Verschieben der Fokussierlinse 15 möglich. In y-Richtung ergibt sich ein Δyₘₐₓ für den dargestellten Fallabschnitt 3' der Laserstrahlung 3.

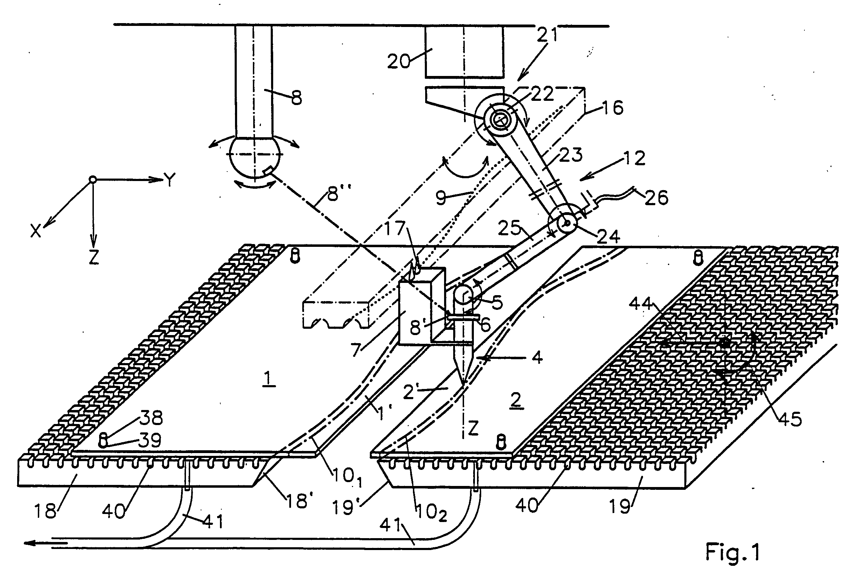

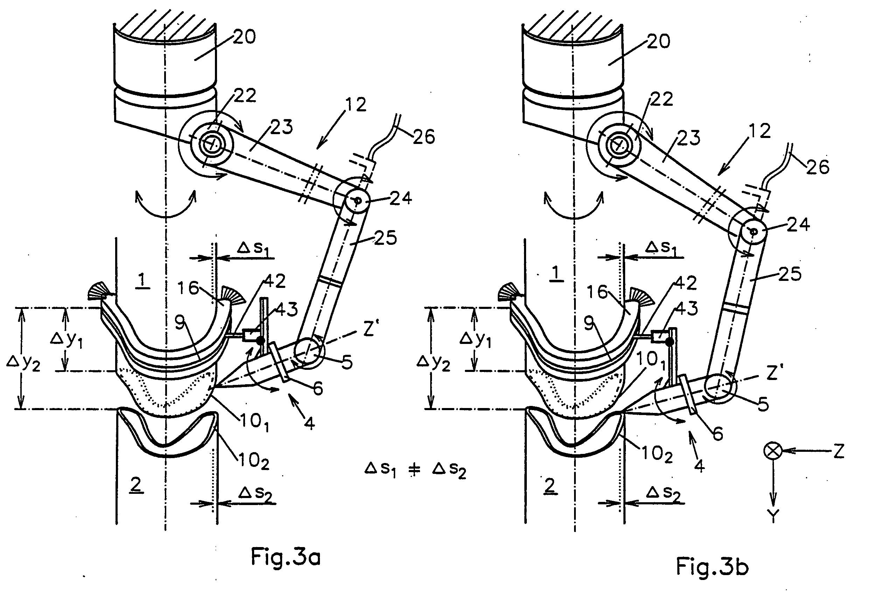

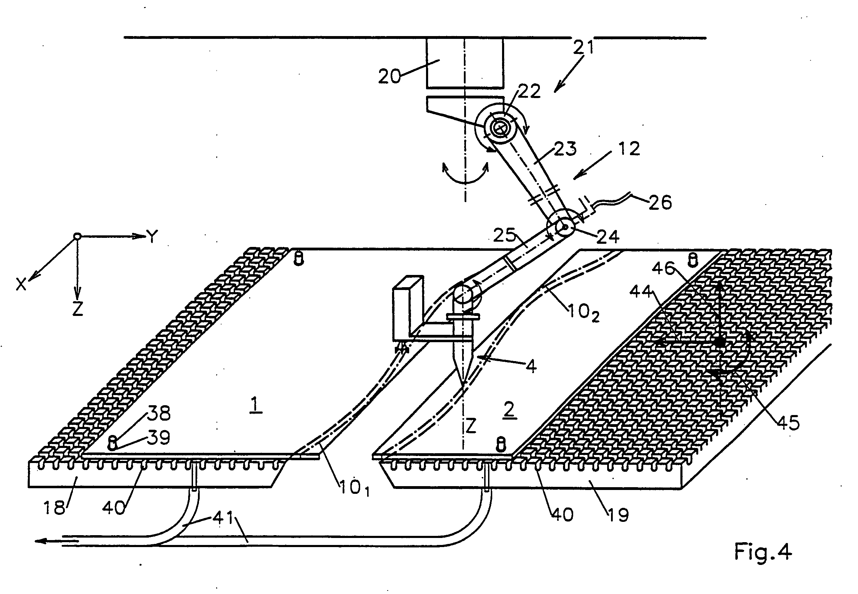

In den Fig.1,3a,3b und 4 wird das Schneiden von Werkstücken 1,2 mit einem Knickarmroboter 12 für unterschiedliche Verfahrensweisen beschrieben. Dabei sind die Werkstücke 1,2 im Falle der Fig.1,4 Bleche, und im Falle der Fig.3a,3b Rohre. Die Wanddicken der Werkstücke 1,2 können durchaus unterschiedlich sein. Das ist in den Fig.3a,3b angedeutet, wo die Wandstärke ΔS2 des Werkstücks 2 größer ist als die Wanddicke ΔS1 des Werkstücks 1. Das ist, um Tailored Tubes herzustellen. Entsprechend können die Werkstückdicken der Werkstücke 1,2 der Fig.1,4 unterschiedliche Dicken aufweisen, um Tailored Blanks herzustellen.

Die Roboterhandachse bzw. der Bearbeitungskopf 4 wird zum Schneiden oberhalb der Werkstücke 1,2 in z-Richtung positioniert. Die z-Koordinate steht senkrecht zu den Koordinaten der x- bzw. der y-Richtung, wobei die x-Richtung die Vorschubrichtung des relativen Vorschubs zwischen den Werkstücken 1,2 und dem Bearbeitungskopf 4 ist. In z-Richtung kann eine z-Komponente vorhanden sein, insbesondere beim Schneiden von dreidimensionalen Werkstücken gemäß Fig.3a,3b. Bei allen 2D- und 3D-Schneidvorgängen muß der Bearbeitungskopf 4 vom Knickarmroboter 12 in geeigneter Weise bewegt werden, um die gewünschte Schnittfuge auf der gewünschten Bahn zu erreichen. Üblicherweise ist dazu die Längsachse Z des Bearbeitungskopfs 4 senkrecht zur Oberfläche des Werkstücks angeordnet. Infolgedessen steht die Projektion der Längsachse Z auf die x-z-Ebene senkrecht zu einer Tangente, die auf der Werkstoffoberfläche in der x-z-Ebene gebildet wird. Die Längsachse Z des Bearbeitungskopfs 4 kann aber auch gleich Z' angeordnet werden, wobei Z' ungleich Z ist. Ein Beispiel hierfür zeigt Fig.3b. In diesem Fall bildet die Längsachse Z des Bearbeitungskopfs 4 einen Winkel mit der x-z-Ebene, so daß die Werkstücke mit einer Fase geschnitten werden. Fasenbildung erleichtert ein spaltarmes Fügen durch Selbstzentrierung, die bei einem Pressen der Bauteile 1,2 mit ihren Schnittflächen gegeneinander auftritt. Das vorbeschriebene Faseschneiden kann nicht nur bei rohrförmigen Werkstücken 1,2 erfolgen, sondern auch bei blechförmigen.

Die Fig.1,4 zeigen solche blechförmigen Werkstücke 1,2, die auf plattenförmigen Aufspanneinrichtungen 18,19 fixiert sind. Die Fixierung erfolgt einerseits mit Positionierstiften 38, die in Positionierlöcher 39 der Werkstücke 1,2 eingreifen. Das ist eine Grobfixierung. Weiterhin dienen der Fixierung auf der Auflagefläche der Aufspanneinrichtungen 18,19 ausgebildete Ansaugrillen 40, die mit Schläuchen 41 an eine Vakuumpumpe angeschlossen sind, so daß die Werkstücke 1,2 durch Ansaugen auf den Aufspanneinrichtungen 18,19 festgehalten werden.

Die Anordnung der Werkstücke 1,2 ist derart, daß sie mit ihren zu formenden Bereichen über einander benachbarte Kanten 18',19' der Aufspanneinrichtungen 18,19 überstehen. Die Kanten 18',19' der Aufspanneinrichtungen 18,19 sind dabei so geformt, daß sie der herzustellenden Kontur 10₁,10₂ möglichst angepaßt sind. In diesen überstehenden Bereichen werden Konturen 10₁ und 10₂ geschnitten. Die abgeschnittenen Blechteile 1' und 2' der Werkstücke 1,2 fallen zwischen den Aufspanneinrichtungen 18,19 hindurch und werden damit entsorgt.

Zur Herstellung der gewünschten Konturen können unterschiedliche Vorgaben gemacht werden. Beispielsweise kann eine virtuelle bzw. rechnerische Kontur vorgegeben werden. Mit den entsprechenden Daten wird der Roboter gesteuert, um die gewünschte Kontur zu erzeugen. Der Roboter kann die gewünschte Kontur jedoch nicht genügend genau herstellen. Die oben genannten Umstände verhindern dies, beispielsweise eine Ungenauigkeit der Ausgestaltung des Knickarmroboters 12 bzw. dessen Einstellungenauigkeiten. Es treten Abweichungen auf, die nicht tolerabel sind. Solche Abweichungen können allerdings auch auftreten, wenn die vorgegebene Kontur mittels mechanischer Hilfsmittel vorgegeben wird. Hier können sich Bauteiltoleranzen bei der Schablonenanfertigung auswirken, wie auch Instabilitäten im Aufbau des Knickarmroboters. Es ist daher auch in solchen Fallen erforderlich, Abweichungen einer geschnittenen Kontur von einer vorgegebenen Kontur zu ermitteln. Diese Abweichungen spielen vor allem in y-Richtung eine Rolle, weil in dieser Richtung vorhandene Abweichungen größere oder geringere Fugenbreiten zur Folge haben. Unterschiedlich breite Fugen führen zu unerwünschten Ausbildungen der nach dem Schneiden mit den geschnittenen Werkstücken 1,2 herzustellenden Schweißnähten.

Fig.1 zeigt, daß zu schneidende Konturen 10₁,10₂ mit einem Sensor 7 hergestellt werden können, der eine Erfassung einer vorgegebenen Kontur 9 dient. Diese Kontur 9 ist in eine Schablone 16 in Gestalt einer punktiert dargestellten Führungsrinne eingearbeitet, an der ein Konturfolgesensor 17 mißt. Der Sensor 17 ist als berührungslos scannender als Triangulationssensor ausgebildet und gibt Signale an eine nicht dargestellte Auswertungseinheit ab, die auf die Steuerung des Knickarmroboters 12 einwirkt. Die vom Sensor 7 erfaßten Signale werden mit der Kontur 9 entsprechenden Signalen rechnermäßig verglichen und aus ermittelten Abweichungen vermag der Rechner Korrektursignale zu ermitteln, die einer Steuerung des optischen Elements 11 dienen, das den Fokuspunkt TCP durch Verschwenken um maximal ± 0,5° im erforderlichen Ausmaß verlagert. Die Verlagerung erfolgt dabei derart, daß während des Schneidens eine Korrektur im Sinne eines Konstanthaltens des Fokuspunktes TCP der Laserstrahlung 3 zu der vorgegebenen Kontur 9 in y-Richtung erfolgt. Infolgedessen weicht die geschnittene Kontur 10₁,10₂ in nur minimalem Umfang von der vorgegebenen Kontur 9 ab, nämlich im Umfang einer Bahnwiederholgenauigkeit, die geringer oder gleich ± 0,025 mal Blechdicke ist.

Die tatsächlichen Bewegungen des Bearbeitungskopfs 4 können meßtechnisch direkt erfaßt werden. Hierzu ist ein Sensor 8' am Bearbeitungskopf 4 befestigt. Der Sensor 8' kann ein Reflektor sein, der aus mindestens drei senkrecht zueinander stehenden Spiegeln besteht und mittels eines Meßstrahls 8" eines Lasertrackers 8 abgetastet wird. Der Tracker 8 ist, wie auch der Knickarmroboter 12, vorzugsweise über den Werkstücken 1,2 hängend angeordnet, um mit weiteren stehenden Robotern die Be- und Entladung der Aufspanneinrichtungen 18,19 unbehindert durchführen zu können. Der Meßabstand des Lasertrackers 8 kann ein bis vier Meter groß sein, so daß für den Knickarmroboter 12 genügend Bewegungsraum oberhalb der Werkstücke vorhanden ist, auch wenn diese von den dargestellten Formen und Konturen abweichende Ausbildungen haben, die erhebliche raumerfordernde Bewegungen des Knickarmroboters 12 benötigen.

In Fig.3a,3b ist das Schneiden von rohrförmigen Werkstücken 1,2 mit Hilfe einer Schablone 16 dargestellt. Die Schablone 16 ist einerseits dem rohrförmigen Außenumfang des Werkstücks 1 angepaßt und trägt andererseits die vorgegebenen Konturen 9, die mechanisch mit einem Taststift 42 abgetastet werden. Der Taststift 42 ist Bestandteil eines Sensors 43, der in nicht dargestellter Weise in y-Richtung erfaßte Signale an eine Auswertungseinheit übermittelt, so daß diese von einer vorgegebenen Kontur 9 differierende Abweichungen ermitteln kann. Es kann dann eine Korrektur im Sinne eines Konstanthaltens eines y-Abstandes des Fokuspunktes TCP der Laserstrahlung 3 zu der vorgegebenen Kontur 9 erfolgen. Dabei versteht sich, daß diese Korrektur die aus Gründen der Räumlichkeit der Werkstücke 1,2 gegebenen y-Verstellungen berücksichtigt. Darüber hinaus ist in Fig.3a,3b dargestellt, daß der Knickarmroboter 12 zur Herstellung der zu schneidenden Kontur 10₁ eine Abweichung von Δy1 berücksichtigen muß, weil die Schablone 16 einen entsprechenden Abstand von dieser Kontur haben muß, damit neben der Schablone geschnitten werden kann. Δy1 berücksichtigt insbesondere auch die Form des Bearbeitungskopfes 4. Diese Form des Kopfes ist besonders für Aufgaben geeignet, bei denen die Handachsenlänge (Kopflänge) geometrisch begrenzt ist, die optische Länge aber zur Strahlformung nötig ist. Δy2 ist dann eine Positionsänderung, die mit Hilfe des Sensors 43 veranlaßt werden muß, um die Kontur 10₂ am Werkstück 2 schneiden zu können. Auch bei dem vorstehend beschriebenen Verfahren erfolgt das Ermitteln von Abweichungen während des ersten Schneidens des Werkstücks 1, jedoch nicht an diesem selbst, sondern an der Schablone 16.

Die in Fig.4 dargestellte Ausführungsform nutzt das Werkstück 1 als Schablone. Dessen geschnittene Kontur 10₁ kann ohne jegliche Korrektur der y-Lage hergestellt sein. Diese Kontur 10₁ entspricht somit der vorgegebenen Kontur 9 oder dient jedenfalls dazu, die zweite zu schneidende Kontur 10₂ in derselben Ausformung herzustellen. Dazu wird die Kontur 10₁ von einem Sensor 7 erfaßt, der als scannender Triangulationssensor ausgebildet ist. Mit Hilfe dieses Sensors wird die vorhandene Kontur 10₁ ausgemessen, wodurch auch die vorhandenen Abweichungen von einer vorgegebenen Kontur 9 erfaßt werden. Diese Erfassung erfolgt während des zweiten Schneidens, nämlich am zweiten Werkstück 2 und die Korrektur dieses zweiten Schneidens in y-Richtung erfolgt unter Berücksichtigung der Abweichungen, die beim Schneiden des ersten Werkstücks 1 aufgetreten sind. Auch in diesem Fall ist die geschnittene Kontur 10₂ gleich der geschnittenen Kontur 10₁.

Für die Durchführung der Korrektur in y-Richtung ist es von Bedeutung, daß sie in Bezug auf die Steuerung des Knickarmroboters hinreichend schnell durchgeführt werden kann. Hierzu ist es erforderlich, daß das optische Bauelement 11, nämlich der in Fig.2 dargestellte Spiegel, möglichst schnell mit einem sehr genau arbeitenden Encoder mit einer Frequenz von 500 Hz, eingestellt wird. Infolgedessen kann der Fokuspunkt TCP entsprechend in y-Richtung verstellt werden, wobei er mit 10 bis 30 µm-Schritten ohne ein Überschwingen von mehr als 40 % der Schrittweite einstellbar ist. Die Abschmelzfront folgt dem Überschwingen nicht so schnell und erstarrt auch am vorhergehenden Punkt nicht so schnell. Werden für die Sensormessung Schablonen eingesetzt, die berührungslos abgetastet werden, nämlich mit Sensorlicht eines Konturfolgesensors 17, so können die Konturnuten oder -kanten hochreflektierend gefräst oder geschliffen ausgebildet werden. Sie sind vorzugsweise dem Bearbeitungsbereich abgewendet, so daß sie von Schweißspritzern nicht verunreinigt werden können. Den Reflektionsgrad kann man dadurch steigern, daß ein dünner heller Farbanstrich mit µm-Partikeln eingesetzt wird, von denen das Sensorlicht in alle Richtungen gestreut wird.

Für das exakte Schneiden spielt auch eine genaue Steuerung in z-Richtung eine Rolle. Hier- hat der Lasertracker 8 den Vorteil, daß er mit ca. 500 Hz die tatsächlichen Koordinaten des Bearbeitungskopfes messen kann, also auch in z-Richtung. Bei Einsatz eines Lasertrackers 8 kann daher auf eine z-Abstandsmessung an den Werkstücken verzichtet werden. Zur Einstellung der z-Lage des Fokusses kann mit Hilfe der linear verschieblichen Linse 15 des Bearbeitungskopfes 4 eine Korrektur der z-Lage erreicht werden. Auf diese Weise wird die Schnittfugenbreite konstant gehalten, indem eine Strahlverbreiterung nicht zur Wirkung kommt, und es kann eine relativ kurze Brennweite von ca. 100 bis 150 mm zum Schneiden verwendet werden, was hohe Schnittgeschwindigkeiten ermöglicht.

Es ist aber auch möglich, eine kapazitive Abstandsregelung einzusetzen, um die z-Lage des Fokuspunktes TCP längs der zu schneidenden Konturen 10₁,10₂ einstellen zu können, wenn gleichbreite Schnittfugen erzielt werden sollen. Eine Schnittbreitenkorrektur kann auch per Entfernungssensor erfolgen, der gleichzeitig der Konturfolgesensor ist, wenn dabei eine Wertetabelle Δy=f(Δz) ist.

Nach dem Schneiden der Konturen 10₁,10₂ der Werkstücke 1,2 werden diese miteinander verschweißt. Randstücke dieser Werkstücke bzw. Blechreste 1',2' sind durch Herunterfallen von den Aufspanneinrichtungen 18,19 entsorgt. Es wird eine Aufspanneinrichtung entriegelt, zum Beispiel die Aufspanneinrichtung 19. Diese kann dann in y-Richtung verschoben werden, bis das Werkstück 2 mit seiner geschnittenen Kontur 10₂ gegen die geschnittene Kontur 10₁ des Werkstücks 1 stößt. Fig.1 zeigt die Zustellrichtung 44 der Aufspanneinrichtung 19 und deutet mit dem Doppelpfeil 45 an, daß die Aufspanneinrichtung 19 in der x-y-Ebene drehweich gelagert ist. Es wird erreicht, daß die Aufspanneinrichtungen 18,19 relativ zueinander verstellbar sind, insbesondere schwenkverstellbar. Die Schwenkverstellbarkeit ermöglicht es, eine Präzisionsgradführung in Richtung 44 zu vermeiden. Beim Zusammenstoßen der geschnittenen Konturen 10₁,10₂ erfolgt in der x-y-Ebene ein automatisches Zurechtrücken. Entsprechend kann auch in Fig.4 verfahren werden. Hier bedeutet der Pfeil 46, daß beim Zusammenfahren der Werkstücke 1,2 mit den Konturen 10₁,10₂ ein automatischer Ausgleich auch in z-Richtung möglich ist. Das ist bei Fasenschnitt der Konturen 10₁,10₂ vorteilhaft, wobei vorausgesetzt wird, daß die Anordnung im übrigen so erfolgt ist, daß die Anordnung der Werkstücke 1,2 auf unerwünschten Niveaus mechanisch ausgeschlossen ist.

Bei dem Verfahren des Schneidens gemäß den Fig.3a,3b werden Rohre oder ähnliche Bauteile mit je Paar in der Fügezone gleicher, sonst aber beliebiger Kontur bearbeitet. Insbesondere können Bauteile unterschiedlicher Wanddicke in y-Richtung so hergestellt werden, daß sie im Bereich ihrer Stirnkanten miteinander verschweißt werden können. Mit dem Sensor 43 bzw. dessen Taststift 42 wird in der Schablone 16 eine von der Oberfläche des Werkstücks 1 äquidistante Kontur abgefahren. Dabei umhüllt die Schablone 16 das Werkstück 1, wozu sie zusammensteckbar ausgebildet ist. Zugleich kann die Schablone 16 der Fixierung des Werkstücks 1 dienen und damit die Aufgabe einer Aufspanneinrichtung übernehmen. Dabei ist die nötige z-Lagenkorrektur auf der Basis der geometrischen Bauteilungenauigkeit (Fokuslage) mit ihrer Auswirkung auf die Schneidfugenbreite sehr gering im Vergleich auch zu der geringen Ungenauigkeit von zum Beispiel innenhochdruckumgeformten Rohren. Die Ungenauigkeit der Bahnwiederholung durch den Knickarmroboter 12 kann mit Hilfe des Sensors 43 oder auch mittels mehrerer Lasertracker und einer Steuerung des optischen Bauelements 11 in y-Richtung ausgeglichen werden, zusammen mit einer Korrektur der z-Lage durch eine Wertetabelle und mit der vom Sensor 43 gleichzeitig gemessenen Entfernung des Fokuspunkts TCP vom Werkstück 1 in z-Richtung.

## Patentansprüche

1. Verfahren zum robotergesteuerten Schneiden und Schweißen von Werkstücken (1,2) mit Laserstrahlung (3), insbesondere zum Herstellen von Tailored Blanks, bei dem ein Bearbeitungskopf (4) die Laserstrahlung (3) einer vorgegebenen Kontur (9) entsprechend bei einem ersten Schneiden auf ein erstes Werkstück (1) fokussiert, bei dem danach der Bearbeitungskopf (4) die Laserstrahlung (3) derselben vorgegebenen Kontur (9) entsprechend bei einem zweiten Schneiden auf ein zweites Werkstück (2) fokussiert, und bei dem die beiden Werkstücke (1,2) mit ihren geschnittenen Konturen (10₁,10₂) zusammengebaut und miteinander mit Laserstrahlung verschweißt werden, **dadurch gekennzeichnet, daß** Abweichungen einer geschnittenen Kontur (10₁,10₂) von der vorgegebenen Kontur (9) in y-Richtung während des Schneidens mit einem Sensor (7,8', 43) ermittelt werden, und daß während eines Schneidens eine Korrektur im Sinne eines Konstanthaltens eines y-Abstandes des Fokuspunktes (TCP) der Laserstrahlung (3) zu der vorgegebenen Kontur (9) erfolgt, indem ein die Lage des Fokuspunkts (TCP) beeinflussendes optisches Bauelement (11) des Bearbeitungskopfes (4) entsprechend angesteuert wird.

2. Verfahren nach Anspruch 1, **dadurch gekennzeichnet, daß** das Ermitteln von Abweichungen am ersten Werkstück (1) oder an einer Schablone (16) während des ersten Schneidens erfolgt, und daß die Korrektur ebenfalls während dieses ersten Schneidens erfolgt.

3. Verfahren nach Anspruch 2, **dadurch gekennzeichnet, daß** das Schneiden des zweiten Werkstücks (2) unter Berücksichtigung der beim ersten Schneiden erfolgten Korrektur durchgeführt wird.

4. Verfahren nach Anspruch 1, **dadurch gekennzeichnet, daß** das Ermitteln von Abweichungen am ersten Werkstück (1) während des Schneidens des zweiten Werkstücks (2) erfolgt, und daß während dieses zweiten Schneidens eine Korrektur unter Berücksichtigung der beim Schneiden des ersten Werkstücks (1) aufgetretenen Abweichungen erfolgt.

5. Verfahren nach einem der Ansprüche 1 bis 4, **dadurch gekennzeichnet, daß** die Korrektur beim Schneiden unter Berücksichtigung der Schnittfugenbreite erfolgt.

6. Verfahren nach einem der Ansprüche 1 bis 5, **dadurch gekennzeichnet, daß** die Korrektur beim Schneiden unter Berücksichtigung der jeweils erforderlichen z-Lage des Werkstücks (1,2) erfolgt.

7. Verfahren nach einem der Ansprüche 1 bis 6, **dadurch gekennzeichnet, daß** die Ermittlung der Abweichungen und/oder die Korrekturen mit einer Frequenz von mindestens 200 Hz durchgeführt werden.

8. Verfahren nach einem der Ansprüche 1 bis 7, **dadurch gekennzeichnet, daß** die beiden geschnittenen Werkstücke (1,2) auf einer die Korrekturen berücksichtigenden Bahn miteinander verschweißt werden.

9. Vorrichtung zum robotergesteuerten Schneiden und Schweißen von Werkstücken (1,2) mit Laserstrahlung (3), insbesondere zum Herstellen von Tailored Blanks, mit einem die Laserstrahlung (3) einer vorgegebenen Kontur (9) entsprechend bei einem ersten Schneiden auf ein erstes Werkstück (1) fokussierenden Bearbeitungskopf (4), der danach die Laserstrahlung (3) derselben vorgegebenen Kontur (9) entsprechend einem bei einem zweiten Schneiden auf ein zweites Werkstück (2) zu fokussieren vermag, **dadurch gekennzeichnet, daß** ein während eines Schneidens die geschnittene Kontur (10₁,10₂) erfassender oder eine Schablone (16) abtastender Sensor (1,8',42) an eine in y-Richtung erfolgende Abweichungen der geschnittenen Kontur (10₁,10₂) von einer vorgehenden Kontur (9) ermittelnde Auswertungseinheit angeschlossen ist, und daß der Bearbeitungskopf (4) ein die Lage des Fokuspunkts (TCP) beeinflussendes optisches Bauelement (11) hat, das mit Hilfe der Auswertungseinheit während eines Schneidens im Sinne eines Konstanthaltens eines Abstandes des Fokuspunktes (TCP) in y-Richtung zu der vorgegebenen Kontur (9) ansteuerbar ist.

10. Vorrichtung nach Anspruch 9, **dadurch gekennzeichnet, daß** als Sensor (8') ein Reflektor am Bearbeitungskopf (4) oder an einer Roboterhand eines Knickarmroboters (12) angebracht ist, dessen Reflektorbahn mit einem Lasertracker (8) verfolgt werden kann, der an die Auswertungseinheit angeschlossen ist.

11. Vorrichtung nach Anspruch 9, **dadurch gekennzeichnet, daß** als Sensor (7) ein Scanner am Bearbeitungskopf (4) oder an eine Roboterhand eines Knickarmroboters (12) angeschlossen ist, und daß der Scanner (7) an die Auswertungseinheit angeschlossen ist.

12. Vorrichtung nach einem der Ansprüche 9 bis 11, **dadurch gekennzeichnet, daß** als optisches Bauelement (11) ein maximal um ± 1,2° in y-Richtung schwenkbarer Spiegel vorhanden ist.

13. Vorrichtung nach Anspruch 12, **dadurch gekennzeichnet, daß** der Spiegel in y-Richtung mit 10 bis 30 µm-Schritten ohne ein Überschwingen um mehr als 40 % der Schrittweite mit mindestens 200 Hz einstellbar ist.

14. Vorrichtung nach einem der Ansprüche 9 bis 13, **dadurch gekennzeichnet, daß** die Projektion der Längsachse (Z) des Bearbeitungskopfes (4) auf x-z-Ebene senkrecht zu einer Tangente der Werkstückoberfläche steht, und daß die Längsachse (Z) bedarfsweise einen Winkel mit der x-z-Ebene bildet.

15. Vorrichtung nach einem der Ansprüche 9 bis 14, **dadurch gekennzeichnet, daß** der Bearbeitungskkopf (4) eine in y-Richtung ausrichtbare Langloch-Schneiddüse (13) aufweist.

16. Vorrichtung nach einem der Ansprüche 9 bis 15, **dadurch gekennzeichnet, daß** der Bearbeitungskopf (4) eine mit einer Schneidlinse (14) versehene, aus dem Strahlengang der Laserstrahlung (3) entfernbare Schneiddüse (13) aufweist.

17. Vorrichtung nach einem der Ansprüche 9 bis 16, **dadurch gekennzeichnet, daß** der Bearbeitungskopf (4) eine in der Richtung des Strahlengangs der Laserstrahlung (3) in Abhängigkeit von einem in z-Richtung messenden Lasertracker (8) verschiebliche Fokussierlinse (15) aufweist.

18. Vorrichtung nach einem der Ansprüche 9 bis 16, **dadurch gekennzeichnet, daß** zur Einstellung einer längs der Kontur (10₁,10₂) gleichbreiten Schnittfuge eine kapazitive Abstandregelung der z-Lage des Fokuspunktes (TCP) vorhanden ist.

19. Vorrichtung nach einem der Ansprüche 9 bis 18, **dadurch gekennzeichnet, daß** eine Kontur (9) von einer Schablone (16) und/oder von einer geschnittenen Kante (10₁) eines geschnittenen Werkstücks (1) vorgegeben und mit einem Konturfolgesensor (17) abtastbar ist.

20. Vorrichtung nach einem der Ansprüche 9 bis 19, **dadurch gekennzeichnet, daß** eine abstastbare Kontur (9) mit einem Sensorlicht eines Konturfolgesensors (17) in alle Richtungen streuenden Partikelanstrich versehen ist.

21. Vorrichtung nach einem der Ansprüche 9 bis 20, **dadurch gekennzeichnet, daß** je ein Werkstück (1,2) mit einer Aufspanneinrichtung (18,19) fixiert und bezüglich der zu schneidenden Konturen (10₁,10₂) überstehend und auf demselben Niveau fixiert ist, auf dem die Aufspanneinrichtungen (18,19) relativ zueinander verstellbar sind.

22. Vorrichtung nach einem der Ansprüche 9 bis 21, **dadurch gekennzeichnet, daß** die Aufspanneinrichtungen (18,19) relativ zueinander in der x-y-Ebene ihres Niveaus schwenkverstellbar sind.
